# EUROPÄISCHE PATENTANMELDUNG

(11) **EP 0 555 541 A1**
(43) Veröffentlichungstag der Anmeldung: **18.08.1993**
(21) Anmeldenummer: 92120939.1
(22) Anmeldetag: 09.12.1992
(51) Int. Cl.: B60G 25/00

(54) **Fahrgestell**

(30) Priorität: 10.02.1992 DE 9201616 U
(71) Anmelder: RAPPOLD GmbH & CO. KG KAROSSERIE-UND FAHRZEUGBAU, D-42489 Wülfrath (DE)
(72) Erfinder: Wienicke, Justus, W-5600 Wuppertal 2 (DE)
(74) Vertreter: Eichler, Peter, Dipl.-Ing.

(57) **Zusammenfassung**

Fahrgestell (10) mit daran angelenkten, abgefederten Rädern (11), und mit am Fahrgestell (10) befestigten, auf dem Boden abstützbaren Abstützzylindern (13) zum Entlasten der Räder (11).

Um ein Fahrgestell (10) mit den eingangs genannten Merkmalen so zu verbessern, daß es ohne aufwendige Montagearbeiten möglichst bis auf den Boden abgesenkt werden kann, wird es so ausgebildet, daß die Räder (11) am Fahrgestell (10) mit Halbachsen (14) angelenkt sind, deren Länge (L) ein Absenken des Fahrgestells (10) mit den Abstützzylindern (13) auf den Boden gestattet, und daß das Fahrgestell (10) mit den Halbachsen (14) über Verriegelungen (15) tragend verbunden ist, die bei Entlastung der Räder (11) lösbar sind.

## Beschreibung

Die Erfindung bezieht sich auf ein Fahrgestell mit daran angelenkten, abgefederten Rädern, und mit am Fahrgestell befestigten, auf dem Boden abstützbaren Abstützzylindern zum Entlasten der Räder.

Derartige Fahrgestelle werden beispielsweise für Kranwagen eingesetzt. Die Abstützzylinder entlasten die Räder, so daß die Last des Krans nicht über die Federung der Räder auf den Boden übertragen werden muß, was wegen der Lastabhängigkeit der Federkraft unerwünscht ist. Vielmehr wird die Last des Krans über die Abstützzylinder auf den Boden übertragen, welche keine lastbedingten Längenänderungen aufweisen, so daß der Kran lastunabhängig feststeht. Mit Hilfe dieser Fahrgestelle ist es jedoch nicht möglich, den Kran bzw. das Fahrgestell selbst aus der normalen Fahrposition abzusenken, jedenfalls nicht, ohne vorher die Räder zu demontieren. Auch dann noch kann nur eine geringe Absenkung erreicht werden.

Demgegenüber liegt der Erfindung die Aufgabe zugrunde, ein Fahrgestell mit den eingangs genannten Merkmalen so zu verbessern, daß es ohne aufwendige Montagearbeiten möglichst bis auf den Boden abgesenkt werden kann.

Diese Aufgabe wird dadurch gelöst, daß die Räder am Fahrgestell mit Halbachsen angelenkt sind, deren Länge ein Absenken des Fahrgestells mit den Abstützzylindern auf den Boden gestattet, und daß das Fahrgestell mit den Halbachsen über Verriegelungen tragend verbunden ist, die bei Entlastung der Räder lösbar sind.

Für die Erfindung ist zunächst von Bedeutung, daß die Räder mit speziellen Halbachsen am Fahrgestell angelenkt sind. Die Länge dieser Halbachsen gestattet ein Absenken des Fahrgestells mit den Abstützzylindern bis auf den Boden. Des weiteren muß das Fahrgestell natürlich auch verfahren werden können. Um dem und der Forderung nach der Absenkung jeweils gerecht werden zu können, ist des weiteren eine tragende Verbindung des Fahrgestells mit den Halbachsen erforderlich, die jedoch lösbar ist, wenn die Räder entlastet worden sind. Das Fahrgestell ist mithin so ausgebildet, daß es keine Teile hat, welche ein bis auf den Boden erfolgendes Absenken behindern.

Um zu erreichen, daß die Halbachsen die erforderliche Länge haben, und um zu erreichen, daß es sich im Falle der Verriegelung der Halbachsen mit dem Fahrgestell tragend verriegeln läßt, ist das Fahrgestell so ausgebildet, daß die Halbachsen an einem fahrzeugmittennahen Gestellträger angelenkt sind, und daß die Verriegelungen nahe den radnahen Enden der Halbachsen angeordnet sind. Bei einer derartigen Ausbildung sind die Belastungen der Bauteile der Anlenkung und der Verriegelungen infolge der fahrzeugmittennahen Anlenkung einerseits und infolge der radnahen Verriegelung andererseits so gering wie möglich.

Das Fahrgestell ist so ausgestaltet, daß der fahrzeugmittennahe Gestellträger bis in Radnähe ragende Querträger hat, an deren Enden die Abstützzylinder angebracht sind. Die Querträger ermöglichen einerseits die großflächige Ausbildung eines auf dem Fahrgestell befindlichen Ladebodens und die Anordnung der Abstützzylinder an den Enden der Querträger bewirkt eine entsprechende Stabilität des Fahrgestells gegen Kippbelastungen, die von einer Beladung des Bodens herrühren.

Eine zweckmäßige Ausgestaltung des Fahrgestells liegt vor, wenn auf jeder Fahrzeugseite zwei parallele Halbachsen vorhanden und durch ein gestellträgerparalleles Verbindungsrohr miteinander gekuppelt sind. Die beiden Halbachsen ermöglichen eine Ausbildung des Fahrgestells mit zwei Rädern auf jeder Seite, wodurch eine entsprechend verstärkte Belastbarkeit des Fahrgestells bzw. des mit dem Fahrgestell gebildeten Fahrzeugs erreicht wird. Das parallele Verbindungsrohr gewährleistet die gemeinsame und gleichzeitige Handhabung der parallelen Halbachsen beim Umbau- und Absenkvorgang des Fahrgestells und trägt außerdem dazu bei, das Fahrgestell im Falle der Verriegelung zu stabilisieren.

Das Fahrgestell bzw. dessen Verriegelung wird zweckmäßigerweise so ausgebildet, daß an jedem Ende des Verbindungsrohres Verriegelungsteile vorhanden sind, die mit fahrgestellseitigen Verriegelungsgegenteilen kuppelbar sind. Infolgedessen wird das Verbindungsrohr an seinen Enden mit dem Fahrgestell gekuppelt, wodurch das Verbindungsrohr praktisch ein Rahmenteil des Fahrgestells wird.

Eine zweckmäßige Ausbildung der Verriegelung liegt vor, wenn die Verriegelungsteile schwenkbare Haken sind, welche die als Bolzen ausgebildeten Verriegelungsgegenteile des Fahrgestells untergreifen. Infolgedessen übernehmen die Haken das Hochhalten des Fahrgestells, wenn sie die Verriegelungsgegenteile untergreifen. Besondere Verbindungsmittel, die zusätzlich zu den Verriegelungsteilen bzw. den Verriegelungsgegenteilen vorhanden sein müßten, werden nicht benötigt.

Eine vorteilhafte Ausgestaltung des Fahrgestells im Bereich der Verriegelungen liegt vor, wenn die Verriegelungsteile von einer Riegelstange schwenkbar sind, die auf dem Verbindungsrohr mit einer Handhabe um ihre Längsachse verdrehbar ist. Beide Verriegelungen werden mit einer einzigen Handhabe bedient, wodurch auch die Gleichzeitigkeit beim Lösen der Verriegelung gewährleistet ist.

Die Erfindung wird anhand eines in der Zeichnung dargestellten Ausführungsbeispiels erläutert. Es zeigt:
- Fig.1: eine Aufsicht auf eine Hälfte eines Fahrgestells,
- Fig.2: eine Seitenansicht eines Fahrgestells im Bereich der Räder,
- Fig.3: eine Seitenansicht einer Hälfte des Fahrgestells, in Fahrrichtung,
- Fig.4: eine schematische Darstellung zweier Verriegelungen an den Enden eines die Halbachsen verbindenden Verbindungsrohres,
- Fig.5: den Schnitt V-V der Fig.4, und
- Fig.6: den Schnitt I-I der Fig.1.

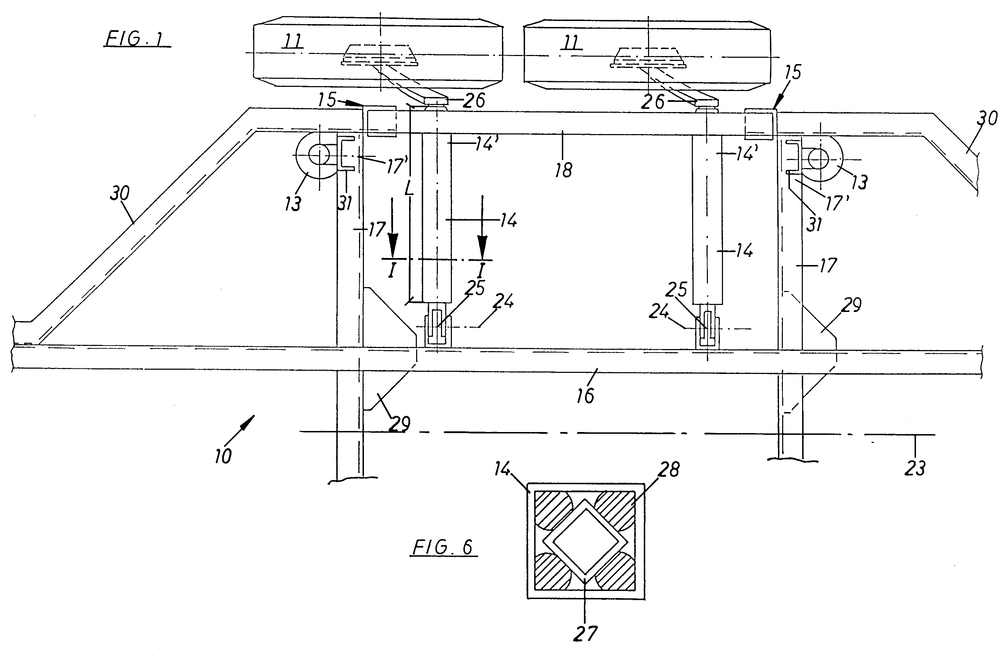

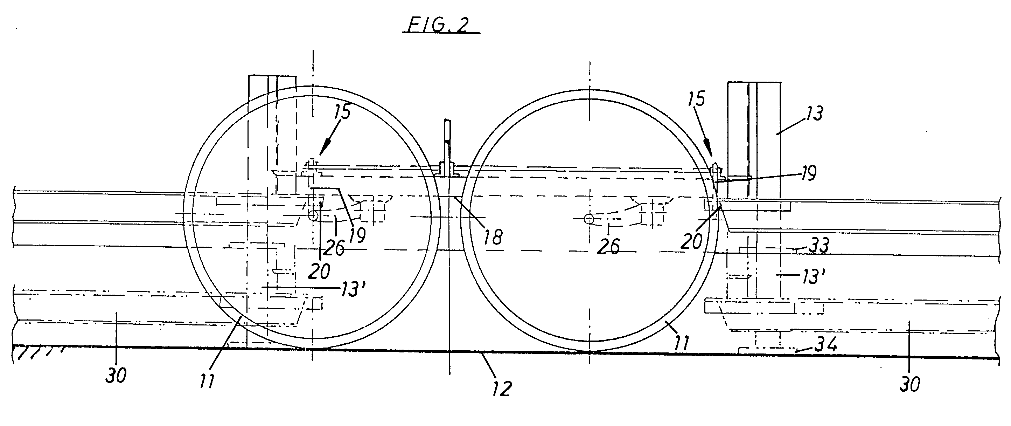

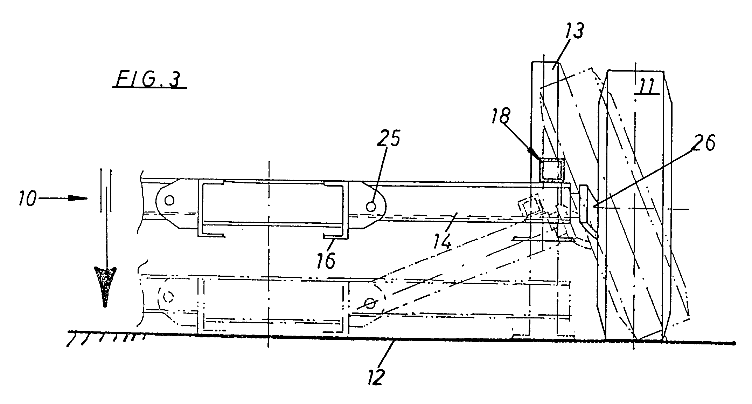

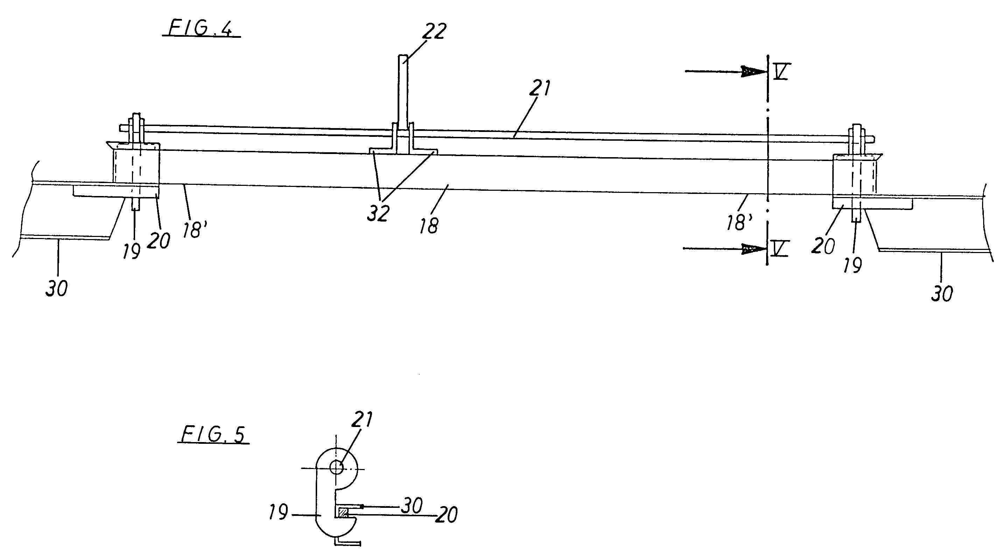

Fig.1 zeigt ein Anhängerfahrgestell 10 mit vereinfachter Darstellung einer Längshälfte. Nahe der Fahrzeugmitte 23 ist ein Gestellträger 16 vorhanden, an dem Halbachsen 14 für Räder 11 angelenkt sind. Die Schwenkachsen 24 der Anlenkstellen 25 der Halbachsen 14 sind längsmittenparallel. Die Halbachsen 14 haben eine in Fig.1 dargestellte Länge L, die einerseits durch die Gelenkstelle 25 und andererseits durch die Anlenkung eines Rades 11 mit einem Achsschenkel 26 bestimmt ist. Der Achsschenkel 26 ist gemäß Fig.3 mit einem Innenrohr 27 verbunden, welches in das Rohr der Halbachse 14 eingreift. Gemäß Fig.6 ist das Rohr der Halbachse 14 etwa quadratisch, ebenso wie das Innenrohr 27, welches gegenüber der Halbachse 14 um 45° verdreht angeordnet und über in den Ecken der Halbachse 14 angeordnete Gummipuffer 28 elastisch abgefedert ist. Jede Vertikalbewegung eines Rades 11 bewirkt infolge dessen exzentrisch zur Halbachse 14 gelegener Anordnung eine Verdrehung des Innenrohres 27, welche über die Gummipuffer 28 zu einer Abfederung des Rades 11 führt.

Der fahrzeugmittenahe Gestellträger 16 hat zwei Querträger 17, die soweit voneinander entfernt sind, daß zwischen ihnen die Halbachsen 14 der Räder 11 den erforderlichen Platz finden können. Die Querträger 17 sind mit dem Gestellträger 16 über Eckenversteifungen 29 verbunden und ihre radnahen Enden sind mit den Enden weiterer, Z-artig ausgebildeter Träger 30 starr verbunden, deren andere Enden mit dem Gestellträger 16 starr in Verbindung stehen, so daß sich beidseitig der Halbachsen 14 jeweils ein geschlossener Rahmenteil ergibt. Innerhalb des Rahmenteils ist nahe der Enden der Querträger 17 jeweils ein Vertikalträger 31 vorhanden, welcher der Befestigung eines Abstützzylinders 13 dient. Der Abstützzylinder ist beispielsweise hydraulisch beaufschlagt, so daß ein Kolben 13' aus der in Fig.2 dargestellten Stellung in die Stellung 34 ausgefahren werden kann. In der Stellung 34 stützt sich der Abstützzylinder 13 auf dem Boden 12 ab und entlastet dabei die Räder 11. Die Träger 30 befinden sich in der aus Fig.2 ebenfalls ersichtlichen Absenkstellung etwas über dem Boden 12, weil sie höher liegen, als der nicht dargestellte Längsträger 16, vgl. Fig.3.

Die Halbachsen 14 sind nahe der Räder 11 mit einem Verbindungsrohr 18 miteinander verbunden. Sie können infolgedessen nur gemeinsam um ihre Längsachsen 24 der Anlenkstellen 25 geschwenkt werden. Das Verbindungsrohr 18 ist so lang bemessen, daß es etwa den Abstand der Träger 30 voneinander überbrückt und auf dessen Enden in nicht näher bezeichneten Aufnahmestücken zur Auflage kommt.

An den Enden 18' des Verbindungsrohrs 18 ist jeweils eine Verriegelung 15 vorhanden. Jede Verriegelung 15 besteht aus einem Verriegelungsteil 19 und einem Verriegelungsgegenteil 20. Aus Fig.5 ist ersichtlich, daß das Verriegelungsteil 19 ein Haken ist, der mit einer Riegelstange 21 schwenkbar ist. Je nach Schwenkstellung untergreift das Riegelungsteil einen das Verriegelungsgegenteil 20 bildenden Bolzen, der mit dem Träger 30 starr und tragend verbunden ist. Die Schwenkbetätigung des Verriegelungsteils 19 erfolgt mit einer Handhabe 22, nämlich einem Querstab, der zwischen zwei Winkelstücken 32 angeordnet ist, mit denen die Riegelstange 21 auf dem Verbindungsrohr 18 schwenkbar gelagert ist.

Aus Fig.2 ist in Verbindung mit Fig.4 zu ersehen, daß das Fahrgestell 10 mit Hilfe der bolzenförmigen Verriegelungsgegenteile 20 an den hakenförmigen Verriegelungsteilen 19 aufgehängt sein kann und dabei hochgehalten wird, so daß das Fahrgestell fahrbereit ist. Die Belastung durch das Fahrgestell ist so groß, daß sich die Verriegelung nicht selbsttätig löst. Es ist auch ohne weiteres möglich, eine Lösesperre für die Verriegelungen 15 vorzusehen. Bei Stillstand des Fahrzeugs bzw. des Fahrgestells 10 ist eine Entriegelung dann möglich, wenn das Fahrgestell 10 mit den Abstützzylindern 13 etwas angehoben wurde, so daß die aus dem Fahrgestell 10 herrührende Last nicht mehr über die Räder 11 abgetragen wird, sondern über die Abstützzylinder 13. Es ist dann möglich, die Handhabe 22 zu betätigen und dadurch die Verriegelungen 15 zu lösen. Nach dem Lösen der Verriegelungen 15 kann das Fahrgestell 10 mit Hilfe der Abstützzylinder 13 abgesenkt werden. Die Absenkung kann gemäß Fig.3 bis auf den Boden 12 erfolgen, wobei die Räder 11 und die Halbachsen 14 die gestrichelte Stellung einnehmen. Sie verhindern ein Absenken des Fahrgestells nicht. Es läßt sich eine besonders dichte Anordnung eines begehbaren Bodens bzw. einer Ladefläche des Fahrgestells 10 am Boden 12 erreichen. Das ist beispielsweise erforderlich, wenn das Fahrzeug ein Anhänger ist, der beispielsweise auf einem Markt einen Stand bildet, bei dem die Höhe des begehbaren Fahrzeugbodens möglichst dicht über dem Boden 12 angeordnet sein soll. Diese Anordnung wird erreicht, ohne daß dazu Montagearbeiten am Fahrzeug bzw. am Fahrgestell 10 erforderlich sind.

## Patentansprüche

1. Fahrgestell (10) mit daran angelenkten, abgefederten Rädern (11), und mit am Fahrgestell (10) befestigten, auf dem Boden (12) abstützbaren Abstützzylindern (13) zum Entlasten der Räder (11), **dadurch gekennzeichnet,** daß die Räder (11) am Fahrgestell (10) mit Halbachsen (14) angelenkt sind, deren Länge (L) ein Absenken des Fahrgestells (10) mit den Abstützzylindern (13) auf den Boden (12) gestattet, und daß das Fahrgestell (10) mit den Halbachsen (14) über Verriegelungen (15) tragend verbunden ist, die bei Entlastung der Räder (11) lösbar sind.

2. Fahrgestell nach Anspruch 1, **dadurch gekennzeichnet,** daß die Halbachsen (14) an einem fahrzeugmittennahen Gestellträger (16) angelenkt sind, und daß die Verriegelungen (15) nahe den radnahen Enden (14') der Halbachsen (14) angeordnet sind.

3. Fahrgestell nach Anspruch 1 oder 2, **dadurch gekennzeichnet,** daß der fahrzeugmittennahe Gestellträger (16) bis in Radnähe ragende Querträger (17) hat, an deren Enden (17') die Abstützzylinder (13) angebracht sind.

4. Fahrgestell nach einem oder mehreren der Ansprüche 1 bis 3, **dadurch gekennzeichnet,** daß auf jeder Fahrzeugseite zwei parallele Halbachsen (14) vorhanden und durch ein gestellträgerparalleles Verbindungsrohr (18) miteinander gekuppelt sind.

5. Fahrgestell nach einem oder mehreren der Ansprüche 1 bis 4, **dadurch gekennzeichnet,** daß an jedem Ende (18') des Verbindungsrohres (18) Verriegelungsteile (19) vorhanden sind, die mit fahrgestellseitigen Verriegelungsgegenteilen (20) kuppelbar sind.

6. Fahrgestell nach einem oder mehreren der Ansprüche 1 bis 5, **dadurch gekennzeichnet,** daß die Verriegelungsteile (19) schwenkbare Haken sind, welche die als Bolzen ausgebildeten Verriegelungsgegenteile (20) des Fahrgestells (10) untergreifen.

7. Fahrgestell nach einem oder mehreren der Ansprüche 1 bis 6, **dadurch gekennzeichnet,** daß die Verriegelungsteile (19) von einer Riegelstange (21) schwenkbar sind, die auf dem Verbindungsrohr (18) mit einer Handhabe (22) um ihre Längsachse verdrehbar ist.
